# EUROPÄISCHE PATENTSCHRIFT

(11) **EP 1 752 695 B1**
(45) Veröffentlichungstag und Bekanntmachung des Hinweises auf die Patenterteilung: **20.01.2010**
(21) Anmeldenummer: 06016073.6
(22) Anmeldetag: 02.08.2006
(51) Int. Cl.: F16K 35/16, F16K 31/60

(54) **Stellgriff für ein Wasserventil**
Handle for a water valve
Poignée pour un robinet d'eau

(30) Priorität: 11.08.2005 DE 102005038312
(43) Veröffentlichungstag der Anmeldung: 14.02.2007
(73) Patentinhaber: Grohe AG, 58675 Hemer (DE)
(72) Erfinder: Allard, Jochen, 58708 Menden (DE); Kirchhoff, Andreas, 58708 Menden (DE); Heupel, Norbert, 59872 Meschede (DE); Huck, Kai, 58300 Wetter (DE); Enslin, Andreas, 58644 Iserlohn (DE); Dinus, Valentin, 58730 Fröndenberg (DE); Kinikarslan, Turgut, 58454 Witten (DE); Hegemann, Ludger, 59227 Ahlen (DE)

(56) Entgegenhaltungen:
- EP-B1- 0 745 798
- WO-A-00/40882
- FR-A1- 2 812 926
- US-A- 2 943 837

## Beschreibung

Die Erfindung betrifft ein Wasserventil für den Sanitärbereich mit einem Stellgriff, der an einer aus einem Ventilgehäuse bewegbar herausgeführten Ventilspindel befestigt ist und der einen Festanschlag aufweist, welcher mit wenigstens einem an dem Ventilgehäuse angeordneten Anschlag zusammenwirkt, wobei am Stellgriff ein weiterer nach außen verdeckt angeordneter und aus seiner Anschlagposition lösbarer Anschlag vorgesehen ist.

Ein derartiges Wasserventil ist aus der deutschen Offenlegungsschrift DE 195 19 816 A1 bekannt. Hierbei ist der lösbare Anschlag von einem äußeren, abnehmbaren Teil des Stellgriffs verdeckt. Derartige Teile oder Schutzkappen besitzen in der Regel einige Spalten oder Öffnungen, in die der Installateur oder Hausmeister etc. mit einem handelsüblichen Werkzeug eingreifen kann, um die Kappe zu entfernen. Außerdem kann durch die Spalten Wasser ins Innere des Stellgriffs gelangen und dort mangels Durchspülung verkeimen und damit ein Hygienerisiko darstellen.

Der Erfindung liegt die Aufgabe zugrunde, den Stellgriff des Wasserventils so weiterzubilden, dass der lösbare Anschlag mit einer von außen an den Stellgriff bringbaren Einrichtung aus seiner Anschlagposition auslenkbar ist.

Diese Aufgabe wird bei einem Wasserventil mit gattungsgemäßem Stellgriff dadurch gelöst, dass der lösbare Anschlag oder ein mit ihm verbundenes Teil wenigstens zum Teil aus einem magnetisch wirksamen Werkstoff besteht und mit einem von außen an den Stellgriff heranbringbaren Magneten aus seiner Anschlagposition auslenkbar ist.

Mit den vorgeschlagenen Maßnahmen kann eine Auslenkung des lösbaren Anschlags erreicht werden, ohne dass Teile von dem Stellgriff abgenommen werden müssen. Als Magnet kann hierbei vorteilhaft ein Dauermagnet eingesetzt werden. Selbstverständlich kann aber auch als Magnet ein Elektromagnet verwendet werden.
In weiterer Ausgestaltung der Erfindung kann der lösbare Anschlag vorzugsweise von einer Feder in seine Anschlagposition gedrückt werden. Es ist aber auch denkbar, dass der lösbare Anschlag durch die Schwerkraft in seine Anschlagposition gedrückt wird.
Nach einer ersten Ausbildung der Erfindung kann der lösbare Anschlag als Ringkörper ausgebildet sein, der auf der Ventilspindel und in dem Stellgriff axial bewegbar angeordnet ist. Der lösbare Anschlag kann dabei von einer Feder in seine Anschlagposition gedrückt werden, die sich einerseits am Stellgriff und andererseits am Ringkörper des lösbaren Anschlags abstützt. Dabei kann der Magnet zweckmäßig in einer etwa der Stirnseite des Stellgriffs entsprechenden Platte eingelassen sein, so dass nach dem Anbringen der Platte an der Stirnseite des Stellgriffs der lösbare Anschlag aus seiner Anschlagposition ausgelenkt wird. Nach dem Entfernen der Platte von der Stirnseite des Stellgriffs wird dann durch die Kraft der Feder der lösbare Anschlag wieder in seine Anschlagposition zurückgeführt. Der Stellgriff kann dabei aus einem ungeteilten Körper, also ohne von außen sichtbare Teilungen und Fugen aufgebaut werden.
Nach einer weiteren Ausbildung der Erfindung kann vorgesehen sein, dass der lösbare Anschlag an einem Stabkörper ausgebildet und exzentrisch im Stellgriff axial verschiebbar angeordnet ist. Auch bei dieser Ausbildung wird der lösbare Anschlag von einer Feder in seine Anschlagposition gedrückt. Bei dieser Ausbildung kann vorteilhaft an der äußeren Stirnseite des Drehgriffs eine Einsenkung vorgesehen sein, in die eine Stirnscheibe einsenkbar ist, wobei der Stabkörper mit der Stirnscheibe verbindbar ist. Hierbei wird zweckmäßig die Stirnscheibe oder ein Teil der Stirnscheibe aus magnetisch wirksamem Werkstoff hergestellt. Vorteilhaft kann die Stirnscheibe aus Kunststoff hergestellt werden, in der eine Platte aus magnetisch wirksamen Werkstoff eingebettet ist.
Der Stabkörper des lösbaren Anschlags wird dabei vorzugsweise mit einem Halsstück versehen, an dessem äußeren Ende ein im Durchmesser vergrößerter Kopf angeformt ist, mit dem er in eine Ausnehmung in der Stirnscheibe eingeschoben werden kann. Somit kann eine formschlüssige Verbindung zwischen dem Stabkörper und der Stirnscheibe hergestellt werden.
Bei dieser Ausführung der Erfindung kann der Magnet zweckmäßig eine Ummantelung mit einem Ringbund aufweisen. Der Ringbund dient hierbei der besseren Griffigkeit beim Auslenken des lösbaren Anschlags bzw. beim Herausziehen der Stirnscheibe mit dem Stabkörper.

Nach einer weiteren Ausbildung der Erfindung kann der Magnet vorteilhaft in einer Haube angeordnet werden, die auf den Stellgriff 3 drehfest axial aufschiebbar ist. Hierbei ist zweckmäßig wenigstens eine Längsnut an der Mantelfläche des Stellgriffs ausgebildet, in die die Griffhaube mit einem entsprechenden Formstück einfasst, so dass nach einem Auslenken des lösbaren Anschlags aus seiner Anschlagposition mit der Griffhaube der Stellgriff weiter über den lösbaren Anschlag hinweg verstellt werden kann. Wird danach die Griffhaube völlig vom Stellgriff abgezogen, drückt die Feder den Stabkörper mit dem lösbaren Anschlag wieder in seine Anschlagposition zurück. Gleichzeitig wird dabei die Stirnscheibe in eine konische Aussenkung des Stellgriffs zurückverlagert.
Zusätzlich zu der vorbeschriebenen Ausführung der Erfindung kann in der Stirnscheibe zentral eine durchgehende Gewindebohrung vorgesehen werden, in der ein Gewindestift angeordnet ist, mit dem alternativ zum Magneten die Stirnscheibe mit dem Stabkörper und dem lösbaren Anschlag entgegen der Kraft der Feder axial aus dem Stellgriff herausgedrückt werden kann.

Ausführungsbeispiele der Erfindung sind in der Zeichnung dargestellt und werden im Folgenden näher beschrieben. Es zeigt in der Zeichnung
- Figur 1: ein zum Teil dargestelltes Wasserventil mit Stellgriff, teilweise geschnitten, wobei der lösbare Anschlag sich in seiner Anschlagposition befindet;
- Figur 2: das in Figur 1 gezeigte Wasserventil, wobei der lösbare Anschlag von einem Magneten aus seiner Anschlagposition ausgelenkt ist;
- Figur 3: ein weiteres Ausführungsbeispiel eines Wasserventils mit Stellgriff, teilweise geschnitten, wobei der lösbare Anschlag sich in seiner Anschlagposition befindet;
- Figur 4: das in Figur 3 gezeigte Wasserventil, wobei der lösbare Anschlag über eine Stirnscheibe mit Hilfe eines Magneten aus seiner Anschlagposition herausgezogen worden ist;
- Figur 5: das in Figur 3 gezeigte Wasserventil, wobei alternativ auf dem Stellgriff eine Haube mit einem Magneten axial aufgeschoben ist;
- Figur 6: das in Figur 5 gezeigte Wasserventil, wobei die Haube auf dem Stellgriff axial verschoben ist, der Art, dass der lösbare Anschlag mit der Stirnscheibe aus seiner Anschlagposition ausgelenkt ist;
- Figur 7: ein weiteres Wasserventil mit Stellgriff, bei dem zusätzlich zentral in der Stirnscheibe ein Gewindestift angeordnet ist;
- Figur 8: das in Figur 7 gezeigte Wasserventil, wobei der lösbare Anschlag mit der Stirnscheibe mit Hilfe des Gewindestifts aus seiner Anschlagposition ausgelenkt ist.

Der Einfachheit halber sind bei den Ausführungsbeispielen in der Zeichnung gleiche oder entsprechende Elemente mit jeweils gleichem Bezugszeichen versehen.

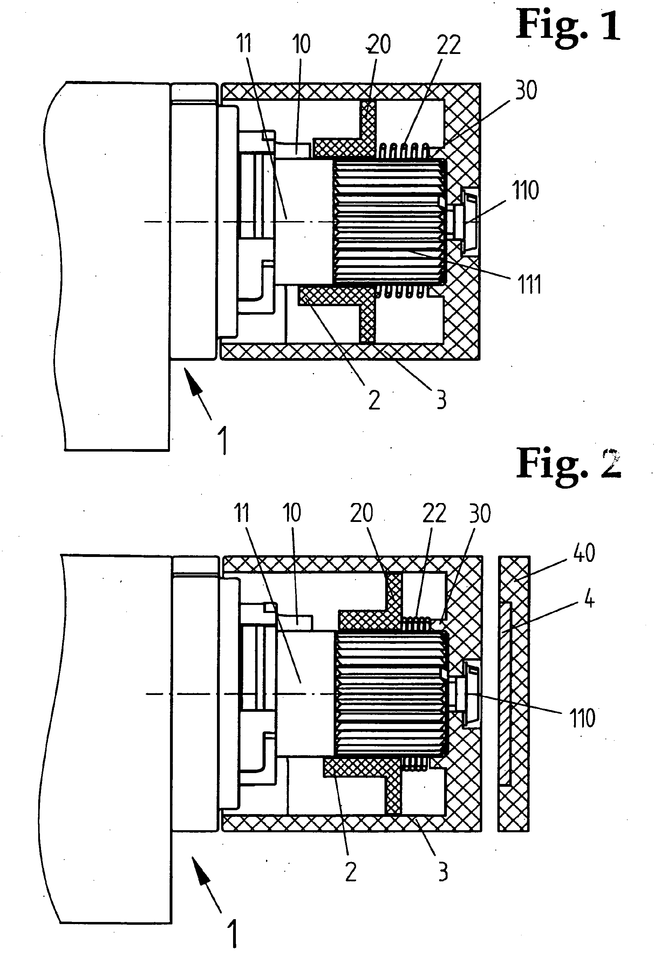

In Figur 1 und Figur 2 der Zeichnung ist ein erstes Ausführungsbeispiel der Erfindung dargestellt. An einem zum Teil dargestellten Ventilgehäuse 1 eines Wasserventils, z. B. eines thermostatgeregelten Wassermischventils, ist seitlich eine drehbare Ventilspindel 11 herausgeführt. Auf der Ventilspindel 11 ist ein Stellgriff 3 mittels Riefenverzahnung 111 drehfest und mit Hilfe einer Schraube 110 axial festliegend angeordnet. Alternativ kann der Stellgriff auch mit angeformten Schnappzungen versehen werden, die in der Stecklage in eine Rastnut in der Ventilspindel eingreifen, so dass die Schraube 110 entfallen kann. Hierdurch kann das Gehäuse des Stellgriffs ohne von außen sichtbare Teilungen und Fugen aufgebaut werden.

Mit einer Drehbewegung des Stellgriffs 3 kann somit z. B. die Mischwassertemperatur eines Wassermischventils eingestellt werden. Die Drehbewegung wird dabei von einem Festanschlag - in der Zeichnung nicht sichtbar dargestellt - und von einem lösbaren Anschlag 2 begrenzt.

In dem topfartig ausgebildeten Stellgriff 3 ist auf der Ventilspindel 11 verschiebbar ein Ringkörper 20 mit dem lösbaren Anschlag 2 angeordnet. Der lösbare Anschlag 2 wirkt dabei mit einem am Ventilgehäuse 1 befestigten Anschlag 10 zusammen. Zwischen dem Ringkörper 20 und der Stirnseite eines am Stellgriff 3 angeformten Ansatzes 30 ist eine Feder 22 angeordnet, die den Ringkörper 20 mit dem lösbaren Anschlag 2 in die Anschlagposition drückt, wie es insbesondere aus Figur 1 der Zeichnung zu entnehmen ist. Der Ringkörper 20 ist zumindest zu einem Teil aus einem magnetisch wirksamen Werkstoff hergestellt.
Für die Auslenkung des lösbaren Anschlags 1 aus seiner Anschlagposition ist ein Dauermagnet 4 vorgesehen, der zur guten Handhabbarkeit in einer Platte 40 aus Kunststoff eingelassen ist. Der Magnet 4 ist dabei so ausgelegt, dass er, sobald er in der Nähe der Stirnseite des Stellgriffs 3 gelangt, den Ringkörper 20 entgegen der Kraft der Feder 22 in die in Figur 2 der Zeichnung dargestellte Position axial verschiebt. Der lösbare Anschlag 2 ist somit aus dem Bereich des festen Anschlags 10 herausgezogen, so dass der Stellgriff 3 mit dem lösbaren Anschlag 2 über den festen Anschlag 10 hinausgedreht werden kann. Wird dagegen der Magnet 4 von der Stirnfläche des Stellgriffs 3 entfernt, so wird der lösbare Anschlag 2 mit dem Ringkörper 20 von der Feder 22 axial auf der Ventilspindel 11 wieder in seine Anschlagposition zu dem festen Anschlag 10 zurückbewegt. Der lösbare Anschlag 2 kann somit mit Hilfe des Magneten 4 und der Feder 22 aus seiner Anschlagposition ausgelenkt und wieder in seine Anschlagposition zurückgeführt werden, ohne dass am Stellgriff 3 Abdeckkappen etc. gelöst werden müssen.

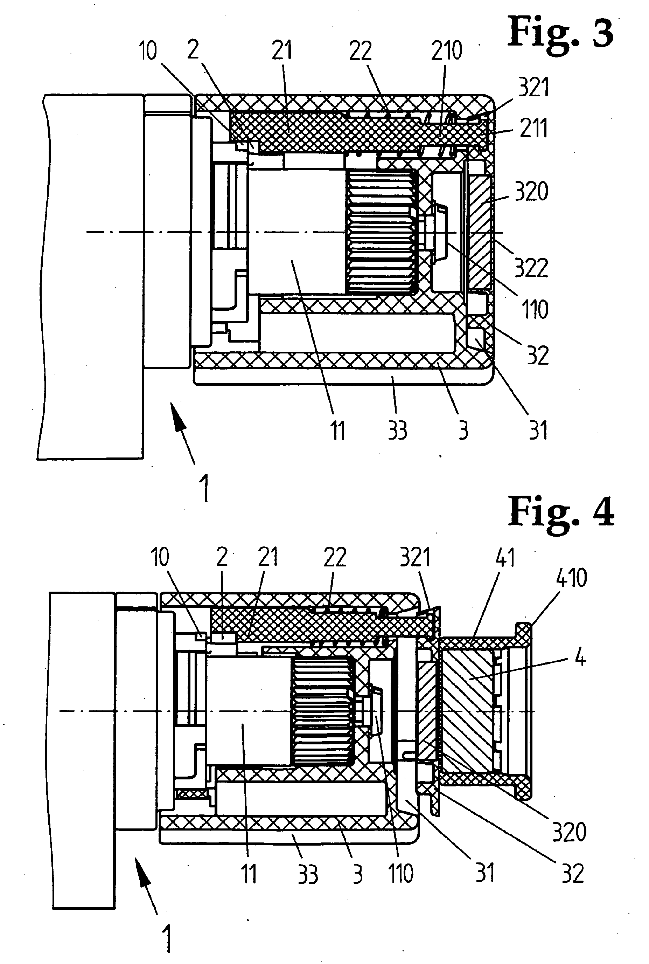

In Figur 3 und 4 der Zeichnung ist ein weiteres Ausführungsbeispiel der Erfindung dargestellt, wobei parallel zur Ventilspindel 11 in dem Stellgriff 3 ein axial verschiebbarer Stabkörper 21 gelagert ist, der am inneren vorstehenden Endbereich einen lösbaren Anschlag 2 trägt. An einer Schulter des Stabkörpers 21 und einer Schulter des Stellgriffs 3 ist eine Feder 22 abgestützt, mit der der Stabkörper 21 und der an ihm ausgebildete, lösbare Anschlag 2 axial in seine Anschlagposition zum feststehenden Anschlag 10 gedrückt ist. Am äußeren Endbereich des Stabkörpers 21 ist an einem Halsstück 210 ein im Durchmesser vergrößerter Kopf 211 ausgebildet. An dem Kopf 211 kann eine Stirnscheibe 32 mit einer Ausnehmung 321 radial aufgeschoben werden, so dass eine formschlüssige Verbindung zwischen dem Stabkörper 21 und der Stirnscheibe 32 herstellbar ist. An der Stirnseite des Stellgriffs 3 ist eine konische Einsenkung 31 ausgebildet, von der die Stirnscheibe 32 aufgenommen werden kann. Konzentrisch zur Mittelachse der Ventilspindel 11 ist außerdem von der Stirnscheibe 32 eine Platte 320 aus magnetisch wirksamem Werkstoff aufgenommen. Zur Verbesserung der Griffigkeit ist am Außenmantel des Stellgriffs 3 wenigstens eine Längsnut 33 ausgebildet.
In Figur 3 der Zeichnung befindet sich der Stabkörper 21 mit dem lösbaren Anschlag 2 in seiner Anschlagposition. Soll der lösbare Anschlag 2 aus seiner Anschlagposition ausgelenkt werden, so kann dies mit einem Magneten 4 erfolgen, wie es in Figur 4 der Zeichnung dargestellt ist. Der Magnet 4 weist hierbei eine Ummantelung 41 auf und trägt am äußeren Rand einen Ringbund 410 zur guten Handhabbarkeit. Vor der Auslenkung des lösbaren Anschlags 2 wird nun der Magnet 4 an die Stirnscheibe 32 von außen aufgesetzt, wodurch eine Haftverbindung zwischen der aus magnetisch wirksamen Werkstoff hergestellten Platte 320 und dem Magnet 4 entsteht. Anschließend kann der Stabkörper 21 mit dem daran ausgebildeten lösbaren Anschlag 2 entgegen der Kraft der Feder 22 zusammen mit der Stirnscheibe 32 von einem Fachmann, z.B. einem Hausmeister, mit dem Magneten 4 soweit herausgezogen werden, bis der lösbare Anschlag 2 außer Eingriff zum festen Anschlag 10 gebracht wird und der Stellgriff 3 entsprechend weiter gedreht werden kann. Soll dagegen der Stabkörper 21 mit dem lösbaren Anschlag 2 wieder in seine Anschlagposition zurückgebracht werden, so erfolgt dies durch die Feder 22, wenn die Zugkraft des Fachmanns am Magneten 4 entsprechend verringert wird. Die Feder 22 zieht dann mit dem Stabkörper 21 die Stirnscheibe 32 in die konische Aussenkung 31 zurück. Danach kann der Magnet z. B. durch ein seitliches Verschieben von der Platte 320 gelöst werden. Damit die Platte 320 von außen unsichtbar ist, weist die Stirnscheibe 32 im Zentrum eine dünne Kunststoffschicht 322 auf, an der die Platte 320 befestigt ist.

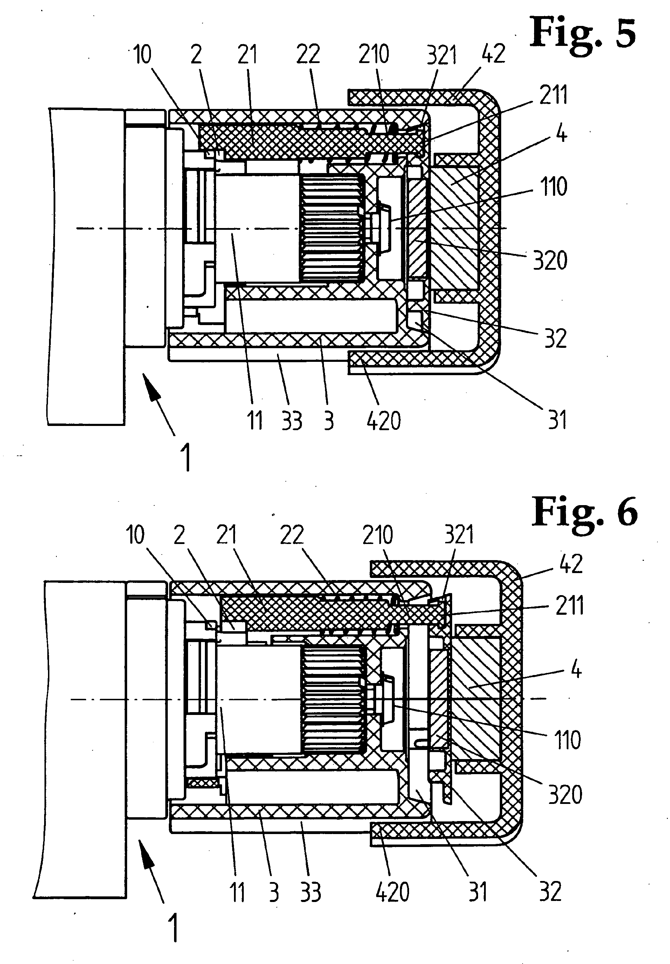

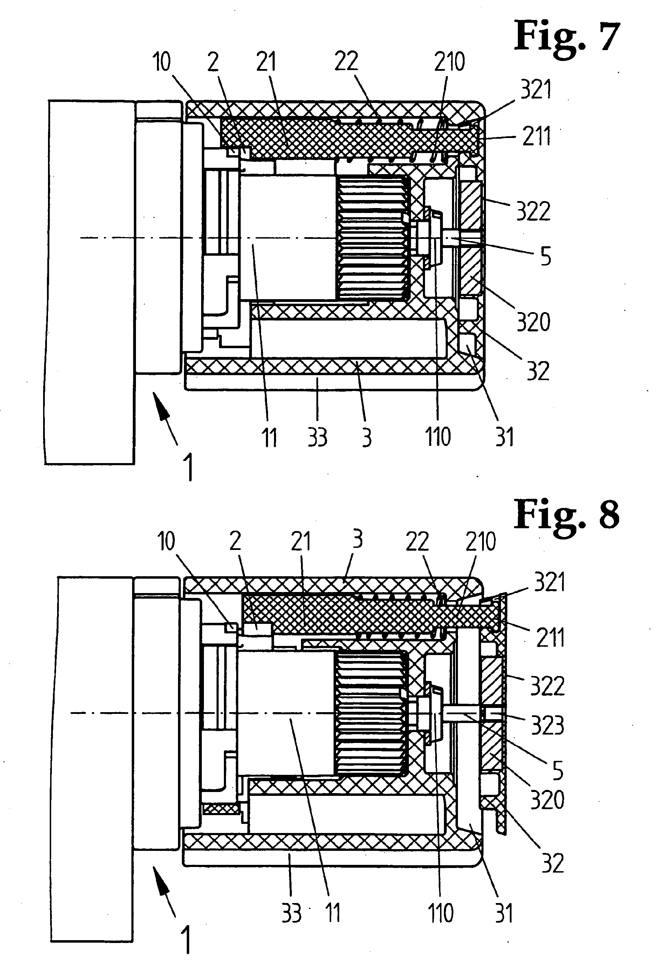

Alternativ zu dem in Figur 4 dargestellten Magneten 4 kann auch, wie es aus Figur 5 und 6 der Zeichnung zu entnehmen ist, der Magnet 4 in einer Haube 42 angeordnet werden. Die Haube 42 kann axial auf die etwa zylindrische Mantelfläche des Stellgriffs 3 vom Fachmann aufgeschoben werden, wobei an der Haube am Mantel ein Formstück 420 ausgebildet ist, das in die Längsnut 33 einfasst und somit eine drehfeste aber axial bewegliche Verbindung zwischen der Haube 42 und dem Stellgriff 3 herstellt, wie es aus Figur 5 der Zeichnung zu entnehmen ist. Der Magnet 4 stellt dabei eine magnetische Verbindung zur Platte 320 her. Zur Auslenkung des lösbaren Anschlags 2 aus seiner Anschlagposition zum festen Anschlag 10 ist lediglich vom Fachmann die auf dem zylindrischen Mantel des Stellgriffs 3 geführte Haube 42 mit der Platte 320 um den für die Auslenkung erforderlichen Betrag axial vom Stellgriff 3 abzuziehen. Danach kann mit der Haube 42, die drehfest über die Längsnut 33 mit dem Stellgriff 3 verbunden ist, der Stellgriff 3 über den feststehenden Anschlag 10 hinaus weiter gedreht werden. Wird dagegen die Haube 42 völlig vom Stellgriff 3 abgezogen, so gelangt der Magnet 4 außer Wirkung und die Feder 22 drückt über den Stabkörper 21 den lösbaren Anschlag 2 wieder in seine Anschlagposition zum feststehenden Anschlag 10. Hierbei wird gleichzeitig die Stirnscheibe 32 über den Kopf 211 in die konische Einsenkung 31 an der Stirnseite des Stellgriffs 3 zurückgeführt.
Bei den Ausführungsbeispielen nach Figur 3 und 4 oder Figur 5 und 6 in der Zeichnung kann zusätzlich zentral in der Platte 320 eine Gewindebohrung 323 angeordnet werden, in der ein Gewindestift 5 eingedreht ist, wie es aus Figur 7 der Zeichnung zu entnehmen ist. Alternativ zu der Auslenkung des lösbaren Anschlags 2 aus seiner Anschlagposition mit Hilfe eines Magneten 4 kann hier die Auslenkung auch mit dem Gewindestift 5 erfolgen. Der Gewindestift 5 liegt hierbei am Kopf der Schraube 110 an. An der Außenseite des Gewindestifts 5 ist ein Schlitz oder ein Innensechskant für den Ansatz eines Drehwerkzeugs vorgesehen. Wird nun der Gewindestift 5 gegen den Kopf der Schraube 110 gedreht, so wird die Stirnscheibe 32 zusammen mit dem Stabkörper 21 axial aus dem Stellgriff 3 herausbewegt, so dass der lösbare Anschlag 2 außer Eingriff zu dem feststehenden Anschlag 10 gelangt, wie es aus Figur 8 der Zeichnung zu entnehmen ist. Wird dagegen die Schraube wieder in die ursprüngliche Position zurückgedreht, so gelangt der lösbare Anschlag 2 wieder mit Hilfe der Kraft der Feder 22 in die Anschlagposition zum feststehenden Anschlag 10.

## Patentansprüche

1. Wasserventil für den Sanitärbereich mit einem Stellgriff (3), der an einer aus einem Ventilgehäuse (1) bewegbar herausgeführten Ventilspindel (11) befestigt ist und der einen Festanschlag aufweist, welcher mit wenigstens einem an dem Ventilgehäuse (1) angeordneten Anschlag (10) zusammenwirkt, wobei am Stellgriff (3) ein weiterer nach außen verdeckt angeordneter und aus seiner Anschlagposition lösbarer Anschlag (2) vorgesehen ist, **dadurch gekennzeichnet, dass** der lösbare Anschlag (2) oder ein mit ihm verbundenes Teil wenigstens zum Teil aus einem magnetisch wirksamen Werkstoff besteht und mit einem von außen an den Stellgriff (3) heranbringbaren Magneten (4) aus seiner Anschlagposition auslenkbar ist.

2. Wasserventil nach Anspruch 1, **dadurch gekennzeichnet, dass** der lösbare Anschlag (2) von einer Feder (22) in seine Anschlagposition gedrückt ist, wobei durch das Heranbringen des Magneten (4) an den Stellgriff (3) die Kraft der Feder (32) überwindbar und der lösbare Anschlag (2) aus seiner Anschlagposition auslenkbar ist.

3. Wasserventil nach Anspruch 1 oder 2, **dadurch gekennzeichnet, dass** der lösbare Anschlag (2) an einem Ringkörper (20) ausgebildet und auf der Ventilspindel (11) und in dem Stellgriff (3) axial bewegbar angeordnet und außerdem mit dem Stellgriff (3) drehfest verbunden ist.

4. Wasserventil nach Anspruch 3, **dadurch gekennzeichnet, dass** der Stellgriff (3) mit einer Schraube (110) an der Ventilspindel (11) axial gesichert ist, wobei zwischen einer Stirnseite des Ansatzes (30) des Stellgriffs (3) und dem Ringkörper (20) des lösbaren Anschlags (2) eine Feder (22) in Schraubenform vorgesehen ist.

5. Wasserventil nach wenigstens einem der vorhergehenden Ansprüche, **dadurch gekennzeichnet, dass** der lösbare Anschlag (2) an einem Stabkörper (21) ausgebildet ist, der exzentrisch im Stellgriff (3) axial verschiebbar angeordnet ist.

6. Wasserventil nach Anspruch 5, **dadurch gekennzeichnet, dass** an der äußeren Stirnseite des Drehgriffs (3) eine Einsenkung (31) vorgesehen ist, in die eine Stirnscheibe (32) einsenkbar ist, wobei der Stabkörper (21) mit der Griffscheibe (32) verbindbar ist.

7. Wasserventil nach Anspruch 6, **dadurch gekennzeichnet, dass** in der Stirnscheibe (32) eine aus magnetisch wirksamem Werkstoff hergestellte Platte (320) eingelassen ist.

8. Wasserventil nach Anspruch 6 oder 7, **dadurch gekennzeichnet, dass** der Stabkörper (21) an der von dem lösbaren Anschlag (2) abgekehrten Seite auf einem Halsstück (210) einen im Durchmesser vergrößerten Kopf (211) trägt, mit dem er in eine Ausnehmung (321) in der Stirnscheibe (32) einschiebbar ist.

9. Wasserventil nach Anspruch 7 oder 8, **dadurch gekennzeichnet, dass** die Stirnscheibe (32) aus Kunststoff hergestellt ist, wobei die Platte (320) wenigstens zum Teil von einer dünnen Kunststoffschicht (322) umgeben ist.

10. Wasserventil nach wenigstens einem der vorhergehenden Ansprüche, **dadurch gekennzeichnet, dass** in der Stirnscheibe (32) eine Gewindebohrung (323) vorgesehen ist, in der ein Gewindestift (5) angeordnet ist, mit dem alternativ die Stirnscheibe (32) aus der Aussenkung (31) im Drehgriff (3) herausdrückbar ist.

11. Wasserventil nach wenigstens einem der vorhergehenden Ansprüche, **dadurch gekennzeichnet, dass** in der Mantelfläche des Stellgriffs (3) wenigstens eine Längsnut (33) ausgebildet ist, in die eine Griffhaube (42) mit einem entsprechenden Formstück (420) in der Stecklage drehfest aber axial verschiebbar einfasst.

12. Kombination eines Magneten mit einem Wasserventil gemäß Anspruch 1 oder 2 zur Auslenkung des lösbaren Anschlags des Stellgriffs des Wasserventils, **dadurch gekennzeichnet, dass** der Magnet (4) in einer Platte (40) eingelassen ist, die etwa dem Durchmesser des Stellgriffs (3) entspricht und an der äußeren Stirnseite des Stellgriffs (3) zur Auslenkung des lösbaren Anschlags (2) anlagerbar ist.

13. Kombination nach Anspruch 12, **dadurch gekennzeichnet, dass** der Magnet (4) eine Ummantelung (41) mit einem Ringbund (410) aufweist, so dass eine gute Griffigkeit für ein Herausziehen der Stirnscheibe (32) gegeben ist.

14. Kombination Anspruch 12 oder 13, **dadurch gekennzeichnet, dass** der Magnet (4) in einer auf den Stellgriff (3) drehfest aufschiebbaren Haube (42) angeordnet ist, wobei die Haube (42) mit ihrem Mantel beim axialen Verschieben des lösbaren Anschlags (2) auf der Mantelfläche des Stellgriffs (3) geführt ist, so dass der Stellgriff (3) nach einer Auslenkung des lösbaren Anschlags (2) von der Haube (42) aus in einen erweiterten Bereich drehbar ist.

## Claims

1. Water valve for sanitary applications, having a control knob (3), which is attached to a valve stem (11) extending movably out of a valve housing (1) and which has a fixed stop which co-operates with at least one stop (10) arranged on the valve housing (1), there being provided on the control knob (3) a further stop (2) which is arranged so as to be concealed in relation to the outside and is releasable from its stop position, **characterized in that** the releasable stop (2) or a part connected thereto consists at least partly of a magnetically active material and is deflectable out of its stop position by means of a magnet (4) applicable to the control knob (3) from the outside.

2. Water valve according to claim 1, **characterized in that** the releasable stop (2) is pressed into its stop position by a spring (22), it being possible for the force of the spring (22) to be overcome and the releasable stop (2) to be deflected out of its stop position by the application of the magnet (4) to the control knob (3).

3. Water valve according to claim 1 or 2, **characterized in that** the releasable stop (2) is formed on an annular member (20) and is arranged on the valve stem (11) and in the control knob (3) so as to be axially movable and, in addition, is joined to the control knob (3) so as to rotate therewith.

4. Water valve according to claim 3, **characterized in that** the control knob (3) is secured axially on the valve stem (11) by means of a screw (110), a spring (22) in helical form being provided between an end face of the shoulder (30) of the control knob (3) and the annular member (20) of the releasable stop (2).

5. Water valve according to at least one of the preceding claims, **characterized in that** the releasable stop (2) is formed on a rod member (21) which is arranged eccentrically in the control knob (3) so as to be axially displaceable.

6. Water valve according to claim 5, **characterized in that** on the outer front face of the control knob (3) there is provided a hollow (31) in which a front disc (32) can be countersunk, the rod member (21) being connectible to the disc (32) of the knob.

7. Water valve according to claim 6, **characterized in that** a plate (320) made of magnetically active material is embedded in the front disc (32).

8. Water valve according to claim 6 or 7, **characterized in that** at its end remote from the releasable stop (2) the rod member (21) carries, on a neck portion (210), a head (211) of enlarged diameter with which it is insertable into a recess (321) in the front disc (32).

9. Water valve according to claim 7 or 8, **characterized in that** the front disc (32) is made of plastics material, the plate (320) being at least partly covered by a thin layer (322) of plastics material.

10. Water valve according to at least one of the preceding claims, **characterized in that** in the front disc (32) there is provided a threaded bore (323) in which there is arranged a threaded pin (5) with which the front disc (32) can alternatively be pressed out of the depression (31) in the rotary knob (3).

11. Water valve according to at least one of the preceding claims, **characterized in that** in the circumferential envelope of the control knob (3) there is formed at least one longitudinal groove (33), into which a knob cap (42) fits by means of a corresponding shaped portion (420) in the inserted position so as to rotate therewith but be axially displaceable.

12. Combination of a magnet with a water valve according to claim 1 or 2 for deflection of the releasable stop of the control knob of the water valve, **characterized in that** the magnet (4) is embedded in a plate (40) which corresponds approximately to the diameter of the control knob (3) and is positionable against the outer front face of the control knob (3) for deflection of the releasable stop (2).

13. Combination according to claim 12, **characterized in that** the magnet (4) has a surround (41) having an annular collar (410), so as to provide a good grip for pulling out the front disc (32).

14. Combination according to claim 12 or 13, **characterized in that** the magnet (4) is arranged in a cap (42) which can be pushed onto the control knob (3) so as to rotate therewith, the cap (42) being guided by its circumferential wall on the circumferential envelope of the control knob (3) on axial displacement of the releasable stop (2), so that after deflection of the releasable stop (2) the control knob (3), by means of the cap (42), is rotatable over a wider range.

## Revendications

1. Robinet d'eau pour des applications dans le domaine sanitaire comportant une poignée de réglage (3) fixée à une broche de robinet (11) sortant de manière mobile d'un corps de robinet (1) et ayant une butée fixe, coopérant avec au moins une butée (10) portée par corps de robinet (1),
la poignée de réglage (3) ayant une autre butée (2), installée de manière cachée vers l'extérieur et pouvant être dégagée de sa position de butée,
**caractérisé en ce que**
la butée escamotable (2) ou une pièce reliée à celle-ci sont au moins en partie en un matériau à effet magnétique et peuvent être dégagées de leur position de butée par un aimant (4) appliqué extérieurement contre la poignée de réglage (3).

2. Robinet d'eau selon la revendication 1,
**caractérisé en ce que**
la butée escamotable (2) est poussée dans sa position de butée par un ressort (22),
l'application de l'aimant (4) contre la poignée (3) dépasse la force développée par le ressort (22) et permet de dégager la butée escamotable (2) de sa position de butée.

3. Robinet d'eau selon la revendication 1 ou 2,
**caractérisé en ce que**
la butée escamotable (2) est réalisée sur un corps annulaire (20) et sur la broche de robinet (11) et elle est montée de manière axialement mobile dans la poignée de réglage (3) en étant, de plus, solidaire en rotation de la poignée de réglage (3).

4. Robinet d'eau selon la revendication 3,
**caractérisé en ce que**
la poignée de réglage (3) est fixée axialement à la broche de robinet (11) par une vis (110), et un ressort hélicoïdal (22) est installé entre la face frontale de l'épaulement (30) de la poignée de réglage (3) et le corps annulaire (20) de la butée escamotable (2).

5. Robinet d'eau selon les revendications précédentes,
**caractérisé en ce que**
la butée escamotable (2) est réalisée sur un organe en forme de tige (21) monté coulissant axialement en position excentrée dans la poignée de réglage (3).

6. Robinet d'eau selon la revendication 5,
**caractérisé par**
une cavité (31) réalisée dans la face frontale extérieure de la poignée de réglage (3) dans laquelle peut s'enfoncer un disque frontal (32), pour relier ainsi l'organe en forme de tige (21) au disque frontal de préhension (32).

7. Robinet d'eau selon la revendication 6,
**caractérisé en ce qu'**
une plaque (320) en un matériau à effet magnétique, est intégrée dans le disque frontal (32).

8. Robinet d'eau selon la revendication 6 ou 7,
**caractérisé en ce que**
l'organe en forme de tige (21) porte une tête (211) de diamètre agrandi sur une pièce de fixation (210), sur le côté opposé à celui de la butée escamotable (2), tête par laquelle cet organe peut se coulisser dans un logement (321) du disque frontal (32).

9. Robinet d'eau selon la revendication 7 ou 8,
**caractérisé en ce que**
le disque frontal (32) est en matière plastique et la plaque (320) est entourée au moins en partie par une mince couche de matière plastique (322).

10. Robinet d'eau selon les revendications précédentes,
**caractérisé en ce qu'**
un taraudage (323) est réalisé dans le disque frontal (32) pour recevoir une broche filetée (5) par laquelle, en variante, on peut dégager le disque frontal (32) de la cavité (31) de la poignée de réglage (3).

11. Robinet d'eau selon les revendications précédentes,
**caractérisé en ce que**
la surface enveloppe de la poignée de réglage (3) comporte au moins une rainure longitudinale (33) dans laquelle vient prendre un cache de préhension (42) ayant une pièce (420) de forme correspondante, en position enfichée, pour être solidaire en rotation, mais libre en coulissement axial.

12. Combinaison d'un aimant et d'un robinet d'eau selon la revendication 1 ou 2,
pour dégager la butée escamotable de la poignée de réglage du robinet d'eau,
**caractérisée en ce que**
l'aimant (4) est intégré dans une plaque (40) dont le diamètre correspond sensiblement à celui de la poignée de réglage (3), et peut être appliqué contre la face frontale extérieure de la poignée de réglage (3) pour dégager la butée escamotable (2).

13. Combinaison selon la revendication 12,
**caractérisée en ce que**
l'aimant (4) comporte une enveloppe (41) avec une collerette annulaire (410) offrant une bonne préhension pour extraire le disque frontal (32).

14. Combinaison selon la revendication 12 ou 13,
**caractérisée en ce que**
l'aimant (4) est logé dans un cache (42) coulissant, solidaire en rotation de la poignée de réglage (3),
le cache (42) étant guidé sur la surface enveloppe de la poignée de réglage (3) par son enveloppe, par coulissement axial de la butée escamotable (2), de façon que la poignée de réglage (3) après dégagement de la butée escamotable (2), puisse être tournée par la coiffe (42) dans une plage étendue.
